# EUROPÄISCHE PATENTANMELDUNG

(11) **EP 2 368 790 A2**
(43) Veröffentlichungstag der Anmeldung: **28.09.2011**
(21) Anmeldenummer: 11169764.5
(22) Anmeldetag: 26.08.2008
(51) Int. Cl.: B62M 3/08, A43B 5/14

(54) **Verbindungselement zum lösbaren Verbinden von Fahrradschuhen mit Fahrradpedalen**

(30) Priorität: 29.08.2007 DE 202007012112 U
(62) Teilanmeldung aus: 08803219.8
(71) Anmelder: RTI Sports Vertrieb von Sportartikeln GmbH, 56220 Urmitz (DE)
(72) Erfinder: Tofaute, Kim, 56112 Lahnstein (DE); Pfeiffer, Marcel, 97078 Würzburg (DE)
(74) Vertreter: von Kreisler Selting Werner

(57) **Zusammenfassung**

Ein Verbindungselement zum lösbaren Verbinden von Fahrradschuhen mit Fahrradpedalen weist einen Grundkörper (10) mit einer Durchgangsöffnung (24) zur Aufnahme mindestens eines Befestigungselements (28) auf. Mit dem Grundkörper (10) ist ein vorderes Klemmelement (12) und ein hinteres Klemmelement (14) verbunden. Um ein Beschädigen der Befestigungselemente (28), insbesondere der Schrauben (29) zu vermeiden, ist erfindungsgemäß ein Abdeckelement (34) vorgesehen.

## Beschreibung

Die Erfindung betrifft ein Verbindungselement zum lösbaren Verbinden von Fahrradschuhen mit Fahrradpedalen.

Derartige Verbindungselemente, die häufig als Cleats bezeichnet werden, werden mit der Schuhsohle eines Fahrradschuhs verbunden. Die Verbindungselemente weisen üblicherweise ein vorderes und ein hinteres Klemmelement auf, die mit einem Grundkörper des Verbindungselements verbunden sind. Die beiden Klemmelemente, die bei an dem Schuh befestigten Verbindungselement in Richtung der Zehen bzw. der Ferse weisen, dienen zur Verbindung mit einer entsprechenden Aufnahmevorrichtung, die am Fahrradpedal vorgesehen ist. Üblicherweise sind am Fahrradpedal federbelastete Rastelemente vorgesehen, die jeweils ein Klemmelement halten. Es ist somit möglich, das vordere Klemmelement in ein erstes Halteelement des Pedals einzuschieben und durch Aufbringen von Kraft nach unten ein Einrasten des hinteren Klemmelements mit dem hinteren Halteelement zu bewirken. Zur Befestigung der Verbindungselemente (Cleats) an den Fahrradschuhen weist der Grundkörper eine üblicherweise ovale Durchgangsöffnung auf. Durch die Durchgangsöffnung werden üblicherweise zwei Inbus-Schrauben gesteckt, die durch Schlitze in der Schuhsohle geführt und in eine innerhalb des Schuhs angeordnete Auflage- oder Gegenplatte geschraubt werden. Zur Aufnahme der beiden Schrauben ist in der Durchgangsöffnung üblicherweise eine im Wesentlichen ovale Scheibe angeordnet, die zur Aufnahme der Schrauben zwei Löcher aufweist. Zur Befestigung des Verbindungselements an dem Fahrradschuh sind somit üblicherweise zwei Schrauben vorgesehen, die mit einer gemeinsamen oder zwei gesonderten Unterlegscheiben verbunden sind und durch eine Durchgangsöffnung des Grundkörpers geführt sind. Die Befestigung erfolgt sodann durch Einschrauben in die Gegenplatte.

Neben bei Rennradschuhen häufig verwendeten Cleats der Fa. Look haben sich insbesondere bei Mountainbikes Cleats der Fa. Shimano mit der Bezeichnung "SPD" durchgesetzt. Die SPD-Cleats sind von mit der Schuhsohle verbundenen Stollen umgeben und stehen im Unterschied zu Look-Cleats nicht oder nur geringfügig über die Unterseite des Schuhs vor. Hierdurch ist die Gefahr des Beschädigens sowie des Abnutzens des Cleats beim Laufen verringert. Insbesondere mit Mountainbikeschuhen wird jedoch häufig auch über unebenen Untergrund gelaufen. Wenn dieser beispielsweise steinig ist (Schotterweg), kann eine Beschädigung der Cleats, insbesondere der Befestigungselemente des Cleats, erfolgen. Häufig werden die Schraubenköpfe derart beschädigt, dass ein Öffnen der Schrauben auch beim Verwenden von Inbus-Schrauben nur noch schwer oder nicht mehr möglich ist. Dies erschwert das Auswechseln der Cleats erheblich, da die Schrauben ggf. aufgebohrt werden müssen.

Aufgabe der Erfindung ist es, ein Verbindungselement zum lösbaren Verbinden von Fahrradschuhen mit Fahrradpedalen zu schaffen, bei dem die Beschädigung während des Gehens, insbesondere die Beschädigung der Befestigungselemente während des Gehens, verringert ist.

Die Lösung der Aufgabe erfolgt erfindungsgemäß durch die Merkmale des Anspruchs 1 bzw. 9.

Bei dem erfindungsgemäßen Verbindungselement handelt es sich insbesondere um ein in der Schuhsohle versenktes Verbindungselement, d.h. ein Verbindungselement, dessen Außenseite nicht über die Lauffläche der Schuhsohle vorsteht, wie es insbesondere bei den von der Fa. Shimano vertriebenen Cleats mit der Bezeichnung "SPD" der Fall ist. Um ein Beschädigen des mindestens einen Befestigungselements, das durch eine oder zwei Durchgangsöffnungen des Grundkörpers geführt ist, zu vermeiden oder zumindest erheblich zu verringern, ist erfindungsgemäß ein Abdeckelements vorgesehen, durch das das mindestens eine Befestigungselement abgedeckt ist. Das Abdeckelement, bei dem es sich insbesondere um ein ebenes, plattenförmiges Element handelt, kann beispielsweise mit dem Befestigungselement bzw. üblicherweise zwei Schraubenköpfen durch Verkleben verbunden werden. Hierbei ist es beispielsweise möglich, einen Klebstoff zu verwenden, der durch Wärme wieder gelöst werden kann, um das Abdeckelement lösbar mit dem Befestigungselement zu verbinden. Ebenso ist es möglich, das Abdeckelement aus einem Kunststoff vorzusehen, der zum Entfernen des Abdeckelements beispielsweise mittels eines Schraubenziehers zerstört werden kann. Eine Zerstörung des Abdeckelements wäre nicht nachteilig, da das Abdeckelement entweder durch ein neues Abdeckelement ersetzt werden kann, oder aber ohnehin das Cleat gewechselt wird und sodann zusammen mit dem neuen Cleat auch ein neues Abdeckelement vorgesehen wird.

Besonders bevorzugt ist es, dass das Abdeckelement zumindest teilweise in der Durchgangsöffnung angeordnet ist. Hierdurch ist auch bei einem durch Kleben fixierten Abdeckelements die Gefahr des ungewollten Ablösens verringert, da ein gewisser seitlicher Halt durch den Rand der Durchgangsöffnung gewährleistet ist. Vorzugsweise ist das Abdeckelement vollständig innerhalb der Durchgangsöffnung angeordnet und steht somit vorzugsweise nicht über eine Außenseite des Grundkörpers vor. Bei der Außenseite des Grundkörpers handelt es sich hierbei um die von der Schuhsohle weg weisende Seite des Grundkörpers.

Das Abdeckelement kann zusätzlich oder anstatt der Verbindung mit dem Befestigungselement auch mit dem Grundkörper verbunden sein, wobei der Grundkörper vorzugsweise eine entsprechende Vertiefung aufweist, so dass das Abdeckelement nicht über die Außenseite des Grundkörpers vorsteht.

Zusätzlich oder anstatt des Verbindens des Abdeckelements mit dem Befestigungselement oder dem Grundkörper durch Verkleben können an dem Grundkörper und/ oder dem Abdeckelement Rastelemente vorgesehen sein. Die Rastelemente dienen zum festen Verbinden des Abdeckelements mit dem Grundkörper. Insbesondere kann das Verbinden der Rastelemente durch Eindrücken des Abdeckelements, d.h. durch Bewegen des Abdeckelements in Richtung der Schuhsohle, erfolgen. Bevorzugt ist es hierbei, dass ein elastisches bzw. verschiebbares Rastelement an dem Abdeckelement vorgesehen ist, wobei ein eher starres, insbesondere stabileres Rastelement an dem Grundkörper vorgesehen ist. Hierdurch ist sichergestellt, dass das Rastelement am Abdeckelement eher zerstört wird als das Rastelement am Grundkörper. Dies ist vorteilhaft, da das Abdeckelement ohne Weiteres ersetzt werden kann. Das Ersetzen des Cleats wäre aufwändiger. Ferner handelt es sich bei dem Cleat um das teurere Bauteil. Des Weiteren ist das Cleat auch ohne Abdeckelement verwendbar.

Insbesondere sind am Umfang des Abdeckelements mehrere Rastelemente angeordnet, die mit korrespondierenden Rastelementen am Grundkörper zusammen wirken. Ebenso kann am Grundkörper eine umlaufende Nut bzw. Hinterschneidung vorgesehen sein, so dass eine exakte Anordnung des Abdeckelements relativ zum Grundkörper nicht erforderlich ist.

Vorzugsweise erfolgt das Verbinden des Abdeckelements mit dem Grundkörper durch ein Einschieben in eine insbesondere seitlich am Grundkörper vorgesehene Einschuböffnung. Ggf. erfolgt zusätzlich ein Einrasten des Abdeckelements über mindestens ein Rastelement. Die Einschuböffnung mündet in eine insbesondere über den gesamten Umfang der Durchgangsöffnung vorgesehene Einschubnut, so dass das Abdeckelement sicher gehalten ist. Die Einschuböffnung kann ggf. durch ein Verschlusselement, wie einen in die Öffnung geklemmten Stopfen oder Riegel, verschlossen werden.

Bei einer weiteren bevorzugten Ausführungsform, die ggf. mit den vorstehend beschriebenen Ausführungsformen kombiniert werden kann, weist das Befestigungselement und/ oder das Abdeckelement mindestens ein Rastelement auf. Insbesondere weist das Abdeckelement an seiner in Richtung des Befestigungselements weisenden Innenseite mindestens einen Ansatz auf, der in eine am Befestigungselement vorgesehene Ausnehmung eindrückbar ist. Ebenso kann auch an dem Befestigungselement ein Ansatz vorgesehen sein, der in eine Ausnehmung des Abdeckelements eingedrückt wird. Vorzugsweise werden als Ausnehmungen die üblicherweise beiden Öffnungen der beiden Inbus-Schrauben genutzt, so dass das Abdeckelement vorzugsweise zwei im Querschnitt insbesondere zylindrische Ansätze aufweist, die in die Inbus-Öffnungen gedrückt werden. Diese Ausführungsform der Erfindung hat den Vorteil, dass an dem Grundkörper selbst keine Veränderungen vorgenommen werden müssen. Um sicherzustellen, dass das Abdeckelement auch bei dieser Ausführungsform insbesondere vollständig innerhalb der Durchgangsöffnung angeordnet ist, muss die entsprechende Ausnehmung in den Grundkörper lediglich etwas tiefer ausgestaltet werden.

Bei einer bevorzugten Weiterbildung der Erfindung sind mit dem vorderen und/ oder dem hinteren Klemmelement an einer Trittfläche Rutschsicherungen vorgesehen. Die Trittfläche der Klemmelemente ist die in montiertem Zustand von der Schuhsohle weg weisende Fläche, die beim Laufen mit dem Fahrradschuh beansprucht wird. Da Cleats üblicherweise aus Metall sind, besteht beispielsweise beim Laufen auf Stein die Gefahr des Wegrutschens. Erfindungsgemäß ist daher bei einer bevorzugten Ausführungsform mit zumindest einem der beiden Klemmelemente eine Rutschsicherung verbunden. Bei der Rutschsicherung kann es sich um ein plattenförmiges Kunststoffelement aus geeignetem Material handeln. Insbesondere kann es sich bei dem Element um ein elastisches, relativ weiches Material handeln. Ebenso kann es sich bei der Rutschsicherung um ein zwar hartes Element, das ggf. auch aus Metall hergestellt sein kann, handeln, dessen Oberfläche stark aufgerauht ist. Die insbesondere beiden Rutschsicherungen sind vorzugsweise mit dem jeweiligen Klemmelement verklebt. Um eine genaue Lageranordnung der Rutschsicherungen sicherzustellen, können die Rutschsicherungen in Ausnehmungen angeordnet sein, wobei die Rutschsicherungen eine größere Dicke verglichen mit der Tiefe der Ausnehmung aufweisen. Vorzugsweise sind die Rutschsicherungen an die Klemmelemente angespritzt. Bei dem Vorsehen mindestens einer Rutschsicherung, vorzugsweise je einer Rutschsicherung je Klemmelement, handelt es sich um eine selbständige Erfindung, die unabhängig von dem Vorsehen eines Abdeckelements ist.

Das Abdeckelement kann vorzugsweise eine Oberfläche aufweisen, die zusätzlich als Rutschsicherung dient.

Das vorstehend beschriebene Abdeckelements stellt eine selbständige, von dem Verbindungselement unabhängige Erfindung dar, da das Abdeckelement auch als Ersatzteil vertrieben werden kann. Hierbei handelt es sich bei dem Abdeckelement um ein insbesondere plattenförmiges Element, das entsprechend der vorstehend beschriebenen bevorzugten Weiterbildungen auf unterschiedliche Arten mit dem Grundkörper und/ oder dem Befestigungselement verbunden werden kann.

Das hintere Klemmelement weist vorzugsweise in Richtung des Grundkörpers eine Querschnittsverjüngung auf. Die Breite des hinteren Klemmelements in Draufsicht verringert sich somit in Richtung des Grundkörpers. Insbesondere weist das Klemmelement eine beidseitige Einschnürung oder Taillierung auf. Ein Verbindungselement mit einem derartigen, in Draufsicht insbesondere hammerkopfförmigen Klemmelement weist den Vorteil auf, dass das Gewicht des Cleats verringert werden kann. Ein derartiges Cleat stellt eine selbständige Erfindung dar, die unabhängig von dem Vorsehen eines Abdeckelements oder einer Abrutschsicherung ist. Bevorzugt ist jedoch eine Kombination mit diesen Erfindungen.

An einer Außenseite, d.h. an der von der Schuhsohle weg weisenden Seite des Cleats, können Justagemarkierungen vorgesehen sein. Hierbei handelt es sich insbesondere um Markierungen in Form von Aufdrucken, Auskerbungen oder dgl. Durch die Markierung ist insbesondere die Längs- und die Querachse des Cleats definiert bzw. ablesbar. Mit Hilfe der Justagemarkierungen ist ein genaueres Ausrichten der Lage des Cleats relativ zum Schuh möglich. Das Vorsehen derartiger Justagemarkierungen an der Außenseite des Grundkörpers und/ oder eines bzw. beider Klemmelemente stellt ebenfalls eine selbständige Erfindung, die unabhängig von dem Vorsehen eines Abdeckelements, einer Rutschsicherung und/ oder einer Querschnittsverjüngung des hinteren Klemmelements ist.

Bei einer besonders bevorzugten Ausführungsform der Erfindung ist mit der Innenseite des Grundkörpers, d.h. mit der in montiertem Zustand in Richtung der Schuhsohle weisenden Seite des Grundkörpers eine Auflageplatte verbunden. Durch die Auflageplatte ist die Auflagefläche zwischen der Außenseite der Schuhsohle und dem Cleat vergrößert. Hierdurch ist eine vereinfachte Justage möglich. Insbesondere ist es möglich, an der in Richtung der Schuhsohle weisenden Seite der Auflageplatte eine feine Riffelung vorzusehen, so dass eine sehr feine Einstellung der Auflageplatte möglich ist. Grobe Riffelungen nach dem Stand der Technik weisen den Nachteil auf, dass bei einem Lösen des Cleats zum Nachjustieren dieses stets in die durch die Feinriffelung in der Sohle hervorgerufenen Vertiefungen rutscht und somit ein geringfügiges Nachjustieren nicht möglich ist. Auf Grund der erhöhten Andrückfläche kann die Höhe der Riffelungen gegenüber dem Stand der Technik geringer ausgebildet sein, so dass die Einkerbungen in den Schuhsohlen geringer sind. Insbesondere weist die Feinriffelung eine Höhe von weniger als 0,5 mm, insbesondere weniger als 0,25 mm auf. Die einzelnen Elemente der Feinriffelung weisen vorzugsweise eine Querschnittsfläche von weniger als 2 mm², insbesondere weniger als 1 mm² und besonders bevorzugt weniger als 0,5 mm² auf. Die Auflageplatte ist vorzugsweise fest mit dem Grundkörper und/ oder einem bzw. beiden Klemmelementen verbunden. Vorzugsweise handelt es sich um ein einstückiges Bauteil, bei dem es sich beispielsweise um ein Gussbauteil handelt. Das Vorsehen einer Auflageplatte an einem Cleat, die der innerhalb des Schuhs angeordneten Gegenplatte gegenüberliegt und vorzugsweise dieselbe Grundfläche wie die Gegenplatte aufweist, stellt eine von den vorstehend beschriebenen Erfindungen unabhängige Erfindung dar, wobei eine Kombination mit einer oder mehreren der vorstehend beschriebenen Erfindungen bevorzugt ist.

Bei einer unabhängigen Erfindung eines Verbindungselements, wie eines Cleats zum lösbaren Verbinden von Fahrradschuhen mit Fahrradpedalen, ist ebenfalls ein Grundkörper vorgesehen, der mit einem vorderen und einem hinteren Klemmelement verbunden ist. Der Grundkörper weist jedoch keine Durchgangsöffnung sondern mindestens eine an einer sohlenseitigen Fläche vorgesehene, als Sackloch ausgebildete Gewindebohrung auf. Die sohlenseitige Fläche des Grundkörpers ist hierbei die in montiertem Zustand an der Außenseite der Schuhsohle anliegende bzw. in diese Richtung weisende Fläche des Grundkörpers. Durch das Vorsehen mindestens einer als Sackloch ausgebildeten Gewindebohrung, die somit dann in Richtung der Schuhsohle offen ist, ist es möglich, ein Befestigungseiement, wie eine Schraube, durch die Schuhsohle hindurch von oben in den Grundkörper des Cleats einzuschrauben. Ein Auflageelement des Befestigungselements ist somit innerhalb des Schuhs angeordnet. Wird eine Schraube als Befestigungselement verwendet, ist somit der Schraubenkopf innerhalb des Schuhs angeordnet. Vorzugsweise sind zwei Befestigungselemente vorgesehen, die beide durch die Schuhsohle hindurch nach unten mit dem Grundkörper verbunden sind. In bevorzugter Ausführungsform sind somit zwei Schrauben vorgesehen, deren Schraubenköpfe innerhalb des Schuhs angeordnet sind, wobei die beiden Schrauben in jeweils eine, jeweils als Sackloch ausgebildete Gewindebohrung eingreifen.

Diese Erfindung weist den erheblichen Vorteil auf, dass die Schraubenköpfe nicht beschädigt werden können, da sie innerhalb des Schuhs angeordnet sind. Eine zusätzliche Abdeckplatte kann entfallen. Anders ausgedrückt ist die Abdeckplatte Teil des Cleats, da der Grundkörper des Cleats auf der von der Schuhsohle weg weisenden Fläche verschlossen ist.

Ein besonderer Vorteil dieser Erfindung liegt darin, dass die Einstellung des Cleats erfolgen kann, während der Schuh mit dem Pedal verbunden ist. Da die Befestigungsmittel, d.h. die beiden Schrauben, von oben zugänglich sind, kann das Cleat in das Pedal eingerastet werden und der Schuh sodann relativ zum Cleat verschoben sowie verdreht werden, um die Justage zu ermöglichen. Anschließend kann von oben ein Fixieren durch Festziehen der Schrauben erfolgen.

Vorzugsweise erfolgt die Aufnahme der Auflageelemente, wie der Schraubenköpfe, in einer innerhalb des Schuhs anzuordnenden Gegenplatte. Die Gegenplatte weist mindestens eine Durchgangsöffnung auf, die kein Gewinde aufweist. Die Durchgangsöffnung kann hierbei konisch ausgebildet sein, um ein kegelstumpfförmiges Auflageelement, wie eine Senkkopfschraube, aufnehmen zu können. Bei der Durchgangsöffnung kann es sich um eine beispielsweise ovale Durchgangsöffnung handeln, von der beide Auflageelemente bzw. Schraubenköpfe aufgenommen werden. Ebenso können zwei gesonderte Durchgangsöffnungen, d.h. je Befestigungsmittel eine Durchgangsöffnung, vorgesehen sein.

Das vorstehend beschriebene, eine selbständige Erfindung darstellende Verbindungselement mit an der Unterseite verschlossenem Cleat kann vorzugsweise, wie vorstehend beschrieben, weitergebildet sein. Insbesondere können eine oder mehrere Rutschsicherungen vorgesehen sein. Ebenso ist eine Querschnittsverjüngung des hinteren Klemmelements vorteilhaft. Auch das Vorsehen von Justagemarkierungen an der Außenseite bzw. der Unterseite des Grundkörpers und/ oder der Klemmelemente ist bevorzugt. Ferner ist auch bei dieser Erfindung das Vorsehen einer Auflageplatte, die insbesondere eine Feinriffelung aufweist, vorteilhaft.

Nachfolgend werden die Erfindungen anhand bevorzugter Ausführungsformen unter Bezugnahme auf die anliegenden Zeichnungen näher erläutert.

Es zeigen:
- Fig. 1: eine schematische Draufsicht eines erfindungsgemäßen Verbindungselements mit Abdeckelement,
- Fig. 2: eine schematische Draufsicht eines erfindungsgemäßen Verbindungselements ohne Abdeckelement,
- Fig. 3: eine schematische Unter-Ansicht des in den Fig. 1 und 2 dargestellten Verbindungselements,
- Fig. 4a, 4b: eine schematische Schnittansicht einer ersten Ausführungsform eines Abdeckelements in montiertem Zustand sowie in Draufsicht,
- Fig. 5a, 5b: eine schematische Schnittansicht einer zweiten Ausführungsform eines Abdeckelements in montiertem Zustand sowie in Draufsicht,
- Fig. 6a, 6b: eine schematische Schnittansicht einer dritten Ausführungsform eines Abdeckelements in montiertem Zustand sowie in Draufsicht, und
- Fig. 7a: eine schematische Seitenansicht einer vierten Ausführungsform eines Abdeckelements,
- Fig. 7b: eine schematische Unteransicht des in Fig. 7a dargestellten Abdeckelements,
- Fig. 8: eine schematische Draufsicht einer weiteren Ausführungsform eines Verbindungselements,
- Fig. 9: eine Ansicht der in Richtung der Schuhsohle weisenden Innenseite des in Fig. 8 dargestellten Verbindungselements,
- Fig. 10: eine schematische Draufsicht einer bevorzugten Ausführungsform eines weiteren erfindungsgemäßen Verbindungselements, und
- Fig. 11: eine Schnittansicht des Verbindungselements entlang der Linie XI-XI in Fig. 10.

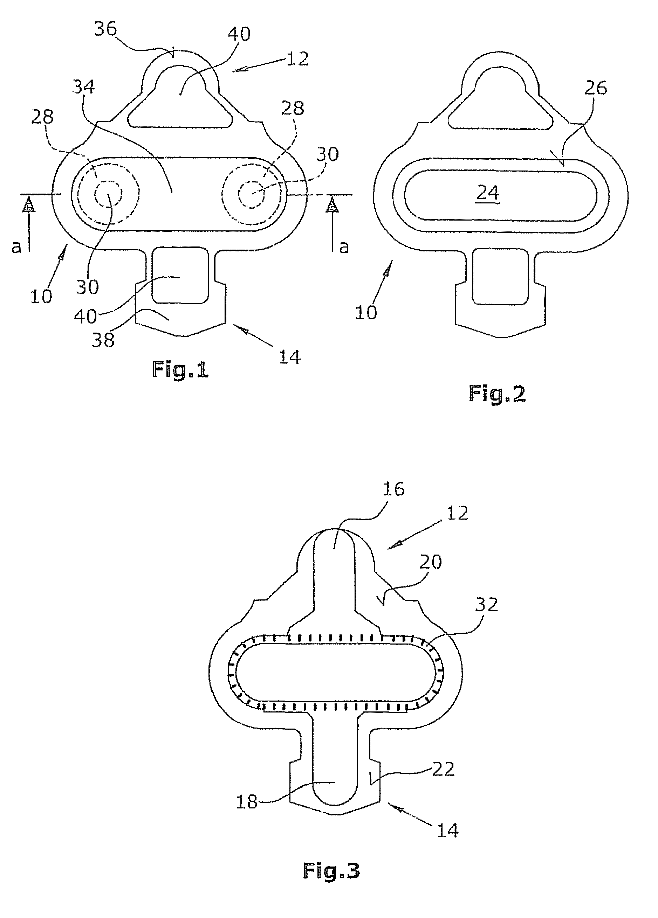

In den Fig. 1 und 2 ist eine Draufsicht bzw. eine Ansicht des montierten Verbindungselements von unten dargestellt. Fig. 3 zeigt sodann die Seite des in montiertem Zustand in Richtung der Schuhsohle weisenden Verbindungselements.

Das Verbindungselement weist einen Grundkörper 10 auf, der mit einem vorderen Klemmelement 12 und einem hinteren Klemmelement 14 verbunden ist. Insbesondere sind die Klemmelemente und der Grundkörper einstückig, insbesondere als Gussteil aus Metall, ausgebildet. Das vordere Klemmelement 12 weist bei montiertem Verbindungselement in Richtung der Zehen und das hintere Klemmelement 14 in Richtung der Ferse. Zum Verbinden der Klemmelemente mit entsprechenden Halteelementen des Pedals sind die beiden Klemmelemente 12, 14 stufenförmig aufgebaut, so dass jedes Klemmelement 12, 14 eine in Richtung der Schuhsohle weisende Ausbuchtung 16, 18 aufweist. In montiertem Zustand ist zwischen den Ausbuchtungen 16, 18 und einer Klemmfläche 20 bzw. 22 ein Abstand vorgesehen. In diesen Abstand wird zum Fixieren des Schuhs bzw. des Verbindungselements am Pedal das jeweilige Halteelement des Pedals eingeführt. Das Halteelement des Pedals greift somit in eine Hinterschneidung ein.

In dem Grundkörper 10 ist eine Durchgangsöffnung 24 vorgesehen. Die Durchgangsöffnung 24 weist eine Stufe 26 auf. Hierdurch ist es möglich, in die Durchgangsöffnung ein im Wesentlichen der größeren Außenabmessung entsprechendes, scheibenförmiges Unterlegelement oder zwei gesonderte Unterlegscheiben 28 einzulegen, die auf der Stufe 26 aufliegen. Die Unterlegscheiben bzw. das Unterlegelement bilden zwei Öffnungen 30 aus, durch die jeweils eine nicht dargestellte Schraube gesteckt werden kann, die sodann mit der innerhalb des Schuhs angeordneten Gegenplatte verschraubt werden. Hierdurch wird das Cleat an der Schuhsohle fixiert. Da es sich bei der Durchgangsöffnung 24 um ein Langloch handelt und die Abmessungen eines einstückigen Unterlegelements in der Breite geringer sind als die Breite der Durchgangsöffnung, kann das Cleat seitlich zur Justage verschoben werden. Da in der Schuhsohle zwei Längsschlitze vorgesehen sind, durch die die Schrauben geführt werden, kann das Cleat in Längsrichtung des Schuhs justiert werden. Um nach dem Anziehen der Schrauben ein Verschieben des Justageelements zu vermeiden, sind an der in Richtung der Schuhsohle weisenden Fläche des Grundkörpers stegförmige Ansätze bzw. eine Riffelung 32 (Fig. 3) vorgesehen.

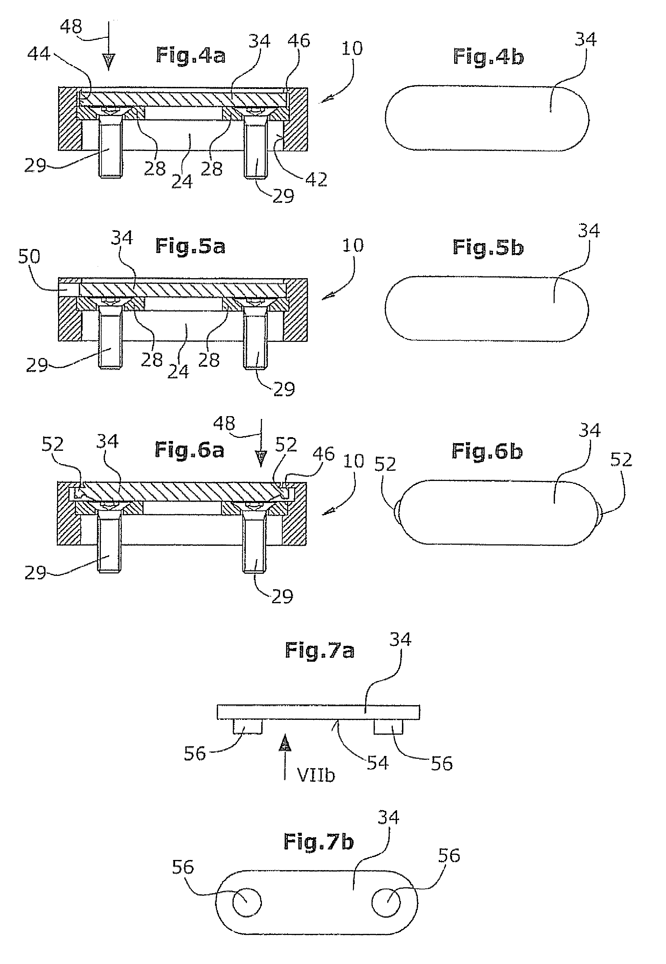

Nach dem Montieren des Cleats an der Schuhsohle kann in der Durchgangsöffnung 24 ein die Schraubenköpfe verdeckendes Abdeckelement 34 (Fig. 1) angeordnet werden. Unterschiedliche Verbindungsmöglichkeiten zwischen dem Abdeckelement 34 und dem Grundkörper 10 werden später anhand der Fig. 4a, 4b; 5a, 5b; 6a, 6b beschrieben. Eine Verbindung des Abdeckelements unmittelbar mit den Schrauben des Befestigungselements wird als Beispiel anhand der Fig. 7a, 7b später beschrieben.

Zusätzlich sind an einer Trittfläche 36 des vorderen Klemmelements sowie im dargestellten Ausführungsbeispiel auch an einer Trittfläche 38 des hinteren Klemmelements 14 Rutschsicherungen 40 vorgesehen. Die Rutschsicherungen 40 können aufgeklebt sein. Insbesondere sind die Rutschsicherungen, um ein seitliches Verschieben und damit ein Lösen der Rutschsicherungen 40 zu vermeiden, in einer Vertiefung angeordnet, wobei die Rutschsicherungen 40 über die Trittflächen 36, 38 vorstehen.

Bei einer ersten Ausführungsform der Erfindung ist das Abdeckelement 34, wie aus Fig. 4a, 4b ersichtlich, als scheibenförmiges Element mit der in Fig. 4b dargestellten Außenkontur ausgebildet. Zur Aufnahme des Abdeckelements 34 ist in der Innenwand 42 der Durchgangsöffnung 24 eine umlaufende Nut 44 vorgesehen. Hierdurch ist in diesem Ausführungsbeispiel die Durchgangsöffnung vollständig umgebendes Rastelement 46 bzw. ein Rastvorsprung ausgebildet. Das Abdeckelement weist eine gewisse Flexibilität auf, so dass dieses in Richtung eines Pfeils 48 in die Durchgangsöffnung 24 eingedrückt werden kann. Der Rastansatz 46 muss nicht durchgehend sein, sondern kann auch unterbrochen sein, so dass am Umfang verteilt mehrere Rastnasen angeordnet sind, die nach innen über das Abdeckelement in montiertem Zustand vorstehen.

Bei einer weiteren Ausführungsform (Fig. 5a, 5b) weist der Grundkörper 10 seitlich eine Einschuböffnung 50 auf. Es ist somit möglich, das Abdeckelement 34 in Fig. 5a von links durch die Einschuböffnung 50 über die im dargestellten Ausführungsbeispiel zwei Unterlegscheiben 28 und die Schrauben 29 nach der Montage zu schieben. Ggf. kann die Einschuböffnung 50 durch einen nicht dargestellten Stopfen oder dgl. verschlossen werden.

Bei einer weiteren Ausführungsform (Fig. 6a, 6b) ist der Grundkörper 10 wie bei dem in Fig. 4a dargestellten Ausführungsbeispiel ausgebildet und weist somit einen umlaufenden Rastvorsprung 46 oder mehrere am Umfang verteilte Rastnasen 46 auf. Zusätzlich weist das Abdeckelement 34 Rastelemente 52 auf. Hierdurch ist das Eindrücken des Abdeckelements 34 in Richtung eines Pfeils 48 vereinfacht.

Bei einer weiteren bevorzugten Ausführungsform weist das Abdeckelement 34 an einer in Richtung des Befestigungselements, insbesondere der Schrauben 29, weisenden Innenfläche 54, im Querschnitt beispielsweise zylindrische Ansätze 56 auf. Die beiden zylindrischen Ansätze 56 weisen einen dem Schraubenabstand entsprechenden Abstand auf. Die Ansätze 56 werden zum Fixieren insbesondere in die Inbus-Öffnungen der beiden Schrauben 29 gedrückt. Ebenso kann eine beispielsweise ovale Unterlegscheibe vorgesehen sein, die eine zusätzliche Aufnehmung aufweist, in die ein oder mehrere Ansätze des Abdeckelements gedrückt werden können.

Die vorstehend beschriebenen Ausführungsformen des Abdeckelements 34 können auch miteinander kombiniert werden. Insbesondere ist eine Kombination der in den Fig. 6 und 7 beschriebenen Ausführungsformen vorteilhaft.

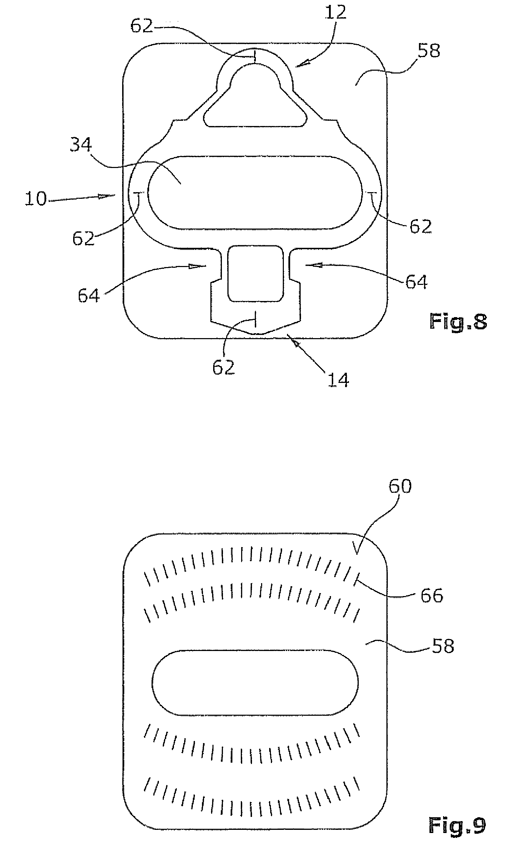

Das in den Fig. 1 und 2 dargestellte Cleat kann entsprechend der in Fig. 8 und 9 dargestellten Ausführungsform zusätzlich mit einer Auflageplatte 58 verbunden sein. Die Auflageplatte 58 ist auf der in Richtung der Schuhsohle weisenden Seite des Cleats mit dem Grundkörper 10 verbunden. Zusätzlich kann eine Verbindung mit einem oder beiden Klemmelementen 12, 14 vorgesehen sein, wobei die Verbindung mit den Klemmelemente 12, 14 sodann mit den Ausbuchtungen 16, 18 erfolgt. Besonders bevorzugt ist es, dass das Cleat zusammen mit der Auflageplatte 58 einstückig, insbesondere als Metall-Gussteil ausgebildet ist. Durch Vorsehen der Auflageplatte 58 ist eine vergrößerte Auflagefläche 60 zur Anlage an der Außenseite der Schuhsohle geschaffen. Auf der Anlagefläche 60 kann eine Feinriffelung 66 in Form einer Vielzahl von kleinen Stegen vorgesehen sein. Auf Grund der vergrößerten Oberfläche kann mit vielen kleinen Stegen dieselbe Verrutschsicherheit wie bei nach dem Stand der Technik größeren Stegen (entsprechend Fig. 3) realisiert werden.

Zusätzlich können auf der von der Schuhsohle weg weisenden Seite des Cleats Justagemarkierungen, wie Einkerbungen 66, vorgesehen sein. Durch die Einkerbungen 66 ist vorzugsweise die Längs- und die Querachse des Cleats definiert, so dass das Cleat an der Schuhsohle leichter ausgerichtet werden kann. Entsprechende Markierungen 62 können selbstverständlich auch an dem in Fig. 1, 2 dargestellten Cleat vorgesehen sein.

Vorzugsweise weist das hintere Klemmelement 14 eine Querschnittsverjüngung bzw. Einbuchtung 64 auf. Durch eine derartige Taillierung kann das Gewicht des Cleats reduziert werden.

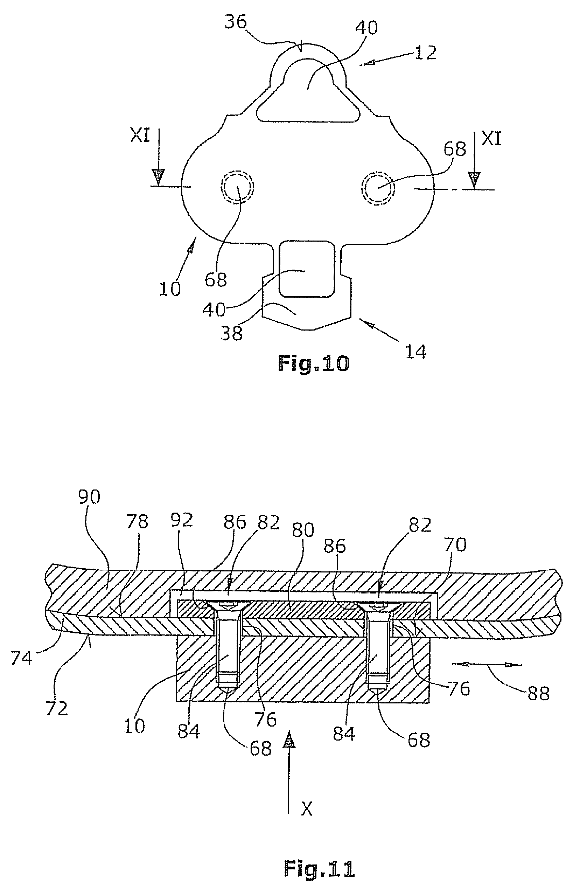

Bei dem in den Fig. 10, 11 dargestellten, eine gesonderte Erfindung betreffenden Verbindungselement sind identische und ähnliche Bauteile mit denselben Bezugszeichen gekennzeichnet.

Der wesentliche Unterschied besteht darin, dass der Grundkörper 10 des Cleats keine Durchgangsöffnung aufweist. Vielmehr weist der Grundkörper 10 zwei jeweils als Sackloch ausgebildete Gewindebohrungen 68 auf. Die beiden Gewindebohrungen sind jeweils in einer sohlenseitigen Fläche 70 des Cleats angeordnet. Die Fläche 70 ist diejenige Fläche des Cleats, die in montiertem Zustand an einer Außenseite 72 der Sohle 74 anliegt. Sofern zwischen dem Cleat 10 und der Sohle 74 ein Zwischenelement, beispielsweise eine Auflageplatte 58 (vgl. Fig. 8, 9) vorgesehen ist, ist die sohlenseitige Fläche 70 diejenige, die in Richtung der Sohle 74 des Schuhs weist.

Im dargestellten Ausführungsbeispiel sind in der Schuhsohle zwei, insbesondere als Langlöcher ausgebildete Durchgangsöffnungen 76 vorgesehen. Die Öffnungen 76 erstrecken sich in Längsrichtung des Schuhs und entsprechen vorzugsweise Öffnungen nach dem Stand der Technik, so dass zur Verwendung des neuen erfindungsgemäßen Cleats eine Veränderung der Schuhsohle 74 nicht erforderlich ist.

Auf einer Innenseite 78 der Schuhsohle 74 ist im dargestellten Ausführungsbeispiel eine Auflage- bzw. Gegenplatte 80 vorgesehen. Die Gegenplatte 80 dient zur Aufnahme der Köpfe 82 der Schrauben 84. Im dargestellten Ausführungsbeispiel sind als Schrauben 84 Senkkopfschrauben vorgesehen, so dass die Köpfe 82 jeweils innerhalb einer konischen Durchgangsöffnung 86 angeordnet werden können. Eine Oberseite der Köpfe 82 steht somit nicht oder nur geringfügig über die Oberseite der Gegenplatte 80 vor. Im dargestellten Ausführungsbeispiel sind zwei gesonderte Durchgangsöffnungen 86, d.h. je Schraube 84 eine Durchgangsöffnung, vorgesehen.

Zur Justage des Cleats 10 in Längsrichtung des Schuhs, d.h. senkrecht zur Zeichenebene der Fig. 11, können die Durchgangsöffnungen 86 entsprechend der in der Sohle 74 vorgesehenen Öffnungen 76 als Langlöcher ausgebildet sein. Die Längsachse dieser Langlöcher verliefe in Längsrichtung der Schuhsohle bzw. senkrecht zur Zeichenebene.

Um eine Justage des Cleats quer zur Schuhlängsrichtung, d.h. in Richtung des Pfeils 88, zu ermöglichen, wäre es möglich, das Cleat 10 zweiteilig auszugestalten. Beispielsweise wäre es möglich, innerhalb des Cleats 10 eine Aufnahmeplatte mit Gewinden vorzusehen, in die die Schrauben 84 eingeschraubt werden. Diese Platte wäre von dem Cleat zumindest teilweise umgriffen und innerhalb eines Hohlraums des Cleats verschiebbar. Durch Anziehen der Schrauben 80 würde sodann ein Andrücken der innenliegenden Platte gegen die Oberseite des Hohlraums und hierdurch ein Andrücken des gesamten Cleats an die Schuhsohle 72 erfolgen.

Bei entsprechend größer ausgebildeten Auflageelementen bzw. Schraubenköpfen 82 kann die Gegenplatte 80 ggf. vollständig entfallen.

Die Schraubenköpfe 82 und die Gegenplatte 80, sofern eine derartige vorgesehen ist, sind von einer Innensohle 90, die eine entsprechende Ausnehmung 92 aufweist, abgedeckt.

## Patentansprüche

1. Verbindungselement zum lösbaren Verbinden von Fahrradschuhen mit Fahrradpedalen, mit
einem Grundkörper (10) mit einer Durchgangsöffnung (24) zur Aufnahme von mindestens einem Befestigungselement (28, 29),
einem mit dem Grundkörper (10) verbundenen vorderen und einem hintern Klemmelement (12, 14), und
einem Abdeckelement (34) zur Abdeckung des Befestigungselements, wobei das Befestigungselement (28, 29) und/oder das Abdeckelements (34) ein Rastelement (56) zum Verbinden des Abdeckelements (34) an dem Befestigungselement (28, 29) aufweist.

2. Verbindungselement nach Anspruch 1, **dadurch gekennzeichnet, dass** das Abdeckelement (34) lösbar mit dem Grundkörper (10) und/oder dem Befestigungselement (28, 29) verbunden ist.

3. Verbindungselement nach Anspruch 1 oder 2, **dadurch gekennzeichnet, dass** das Abdeckelement (34) zumindest teilweise innerhalb der Durchgangsöffnung (24) angeordnet ist.

4. Verbindungselement nach einem der Ansprüche 1 bis 3, **gekennzeichnet durch** mit dem Grundkörper (10) und/oder dem Abdeckelement (34) verbundene Rastelelemente (46, 52) zum Halten des Abdeckelements (10).

5. Verbindungselement nach einem der Ansprüche 1 bis 4, **dadurch gekennzeichnet, dass** der Grundkörper (10) eine insbesondere seitlich angeordnete Einschuböffnung (50) zum Einschieben des Abdeckelements (34) aufweist.

6. Verbindungselement nach einem der Ansprüche 1 bis 5, **dadurch gekennzeichnet, dass** der Grundkörper (10) eine insbesondere umlaufende Nut (44) zur Aufnahme des Abdeckelements (34) aufweist.

7. Verbindungselement nach einem der Ansprüche 1 bis 6, **dadurch gekennzeichnet, dass** das Abdeckelement (34) einen Ansatz (56) aufweist, der zur Verbindung in eine Ausnehmung des Befestigungselements (28, 29) eindrückbar ist.

8. Verbindungselement nach einem der Ansprüche 1 bis 7, **gekennzeichnet durch** eine mit dem vorderen oder dem hinteren Klemmelement (12, 14) an einer Trittfläche (36, 38) vorgesehene Rutschsicherung (40).

9. Verbindungselement nach einem der Ansprüche 1 bis 8, **dadurch gekennzeichnet, dass** das hintere Klemmelement (14) eine Querschnittsverjüngung (64) in Richtung des Grundkörpers (10) aufweist.

10. Verbindungselement nach einem der Ansprüche 1 bis 9, **gekennzeichnet durch** eine an der Außenseite des Grundkörpers und/oder eines bzw. beider Klemmelemente (12, 14) vorgesehenen Justagemarkierung (62).

11. Verbindungselement nach einem der Ansprüche 1 bis 10, **gekennzeichnet durch** eine auf der Innenseite des Grundkörpers (10) vorgesehene Auflageplatte (58), die insbesondere einstückig mit dem Grundkörper (10) und/oder den Klemmelementen (12, 14) ausgebildet ist und vorzugsweise eine Feinriffelung (66) aufweist.
